# EUROPÄISCHE PATENTANMELDUNG

(11) **EP 4 810 929 A1**
(43) Veröffentlichungstag der Anmeldung: **23.09.2026**
(21) Anmeldenummer: 26165184.8
(22) Anmeldetag: 16.03.2026
(51) Int. Cl.: G01M 1/32

(54) **AUSWUCHTVORRICHTUNG FÜR EINEN ROTOR**

(30) Priorität: 18.03.2025 DE 102025110482
(71) Anmelder: Rolls-Royce Deutschland Ltd & Co KG, 15827 Blankenfelde-Mahlow (DE)
(72) Erfinder: DREVS, Steffen, 15827 Blankenfelde-Mahlow (DE)

(57) **Zusammenfassung**

Die Offenbarung betrifft eine Auswuchtvorrichtung (10) für einen Rotor (100), umfassend: einen konzentrisch zu einer Rotationsachse (AR) des Rotors (100) angeordneten Aufnahmekörper (12) mit einer Mehrzahl an um die Rotationsachse (AR) verteilten Aufnahmetaschen (14), und mindestens einen Wuchtkörper (20), der zur Aufnahme in eine der Aufnahmetaschen (14) ausgebildet ist.

Gemäß der Offenbarung ist vorgesehen, dass die Aufnahmetaschen (14) an einer radial inneren Seite (30) einen Öffnungsabschnitt (18), über den der Wuchtkörper (20) eingesetzt werden kann, und an einer radial äußeren Seite (32) einen Begrenzungsabschnitt (16) aufweisen, wobei der Wuchtkörper (20) im eingesetzten Zustand an dem Begrenzungsabschnitt (16) anliegt, und die Auswuchtvorrichtung (10) einen Befestigungsring (40) aufweist, der radial innerhalb des Aufnahmekörpers (12) angeordnet ist und ausgebildet ist, mit dem mindestens einen Wuchtkörper (20) in Kontakt gebracht zu werden, und den Wuchtkörper (20) in der Aufnahmetasche (14) zu halten.

## Beschreibung

Die Offenbarung betrifft eine Auswuchtvorrichtung für einen Rotor. Auswuchtvorrichtungen für Rotoren, insbesondere bei Kraftmaschinen oder Arbeitsmaschinen, sind allgemein bekannt.

Auswuchtvorrichtungen stellen einen Rundlauf bei rotierenden Vorrichtungen, insbesondere Maschinen, sicher, indem sie gezielt Unwuchten, welche beispielsweise durch Montage- und/oder Fertigungstoleranzen entstehen, kompensieren. Hierzu können durch die Auswuchtvorrichtung insbesondere gezielt Masseveränderungen hervorgerufen werden, zum Beispiel durch das Hinzufügen oder Entfernen von Gewicht an bestimmten Positionen des Rotors. Generell ist es bei Auswuchtvorrichtungen wichtig, dass diese während des Betriebs sicher angebracht sind, d. h. die Auswuchtvorrichtung und/oder einzelne Wuchtkörper der Auswuchtvorrichtung sich nicht unkontrolliert aus ihrer Aufnahme bewegen. Des Weiteren ist es wünschenswert, einen aufwand während der Montage und/oder des Auswuchtvorgangs möglichst gering zu halten.

Gattungsgemäße Auswuchtvorrichtungen sind beispielsweise in US 2020/056482 A1 oder US 11732585 B2 gezeigt.

Auswuchtvorrichtungen sind noch verbesserungswürdig hinsichtlich eines oder mehrerer der oben genannten Aspekte.

An dieser Stelle setzt die vorliegende Offenbarung an. Die Offenbarung schlägt in einem ersten Aspekt eine Auswuchtvorrichtung vor. Die Offenbarung geht aus von einer Auswuchtvorrichtung für einen Rotor, umfassend einen konzentrisch zu einer Rotationsachse des Rotors angeordneten Aufnahmekörper mit einer Mehrzahl an um die Rotationsachse verteilten Aufnahmetaschen, und mindestens einen Wuchtkörper, der zur Aufnahme in eine der Aufnahmetaschen ausgebildet ist.

Gemäß der Offenbarung ist vorgesehen, dass die Aufnahmetaschen an einer radial inneren Seite einen Öffnungsabschnitt aufweisen, über den der Wuchtkörper eingesetzt werden kann, und an einer radial äußeren Seite einen Begrenzungsabschnitt aufweisen, wobei der Wuchtkörper im eingesetzten Zustand an dem Begrenzungsabschnitt anliegt, und die Auswuchtvorrichtung einen Befestigungsring aufweist, der radial innerhalb des Aufnahmekörpers angeordnet ist und ausgebildet ist, mit dem mindestens einen Wuchtkörper in Kontakt gebracht zu werden, und den Wuchtkörper in der Aufnahmetasche zu halten.

Die Offenbarung basiert auf der Erkenntnis, dass zum einen ein sicherer Halt der Wuchtkörper gewährleistet werden sollte, zum anderen jedoch auch eine einfache Montage, sowie eine bauraum- und gewichtssparende Ausführung der Auswuchtvorrichtung vorteilhaft ist. Indem der Aufnahmekörper der Auswuchtvorrichtung an seiner radial inneren Seite die Aufnahmetaschen aufweist, über deren Öffnungsabschnitt die Wuchtkörper eingesetzt werden können, wird eine gute Zugänglichkeit, insbesondere zur Montage, ermöglicht. Eine derartige Zugänglichkeit ist insbesondere von Vorteil, wenn der Bauraum stark ausgenutzt ist und, insbesondere axial, eng benachbarte Bauteile die Zugänglichkeit erschweren. Durch die Begrenzungsabschnitte der Aufnahmetaschen, die an der radial äußeren Seite des Aufnahmekörpers angeordnet sind, wird weiter ein sicherer Halt der Wuchtkörper gewährleistet, der selbst bei hohen Drehzahlen ein Lösen oder Verrutschen verhindert.

Die Offenbarung schließt die Erkenntnis ein, dass mittels eines Befestigungsrings, der radial innerhalb des Aufnahmekörpers angeordnet ist und mit den Wuchtkörpern zwecks Befestigung in Kontakt bringbar ist, eine einfachere Montage und eine sichere Befestigung erreicht werden kann. Indem nämlich der Befestigungsring derart innerhalb des Aufnahmekörpers und der in Umfangsrichtung angeordneten Wuchtkörper einsetzbar ist, kann der Befestigungsring eine Haltekraft auf den Wuchtkörper ausüben, und diesen somit in die Aufnahmetasche gegen den Begrenzungsabschnitt drücken. Dadurch, dass der Befestigungsring beispielsweise elastisch verformbar ist, kann er nach Positionieren eines oder mehrerer Wuchtkörper in den Aufnahmekörper gegen die Wuchtkörper, zum Befestigen der Wuchtkörper eingesetzt werden. Hierbei müssen vorteilhaft die einzelnen Wuchtkörper nicht aufwendig individuell, zum Beispiel über Schraubverbindungen, befestigt werden. Dadurch, dass der Befestigungsring eine Haltekraft in eine Richtung, nämlich in im wesentlichen radiale Richtung nach außen zeigend, auf die Wuchtkörper ausübt, und jeder Wuchtkörper gegen Bewegungen in sämtliche andere Richtungen in der Aufnahmetasche gesichert ist, entsteht eine sichere, aber gleichzeitig einfach zu montierende Auswuchtvorrichtung. Durch den Befestigungsring ist es vorteilhaft möglich, die Abhängigkeit von weiteren Formschlussmerkmalen, die eine Bewegung des Wuchtkörpers in radialer Richtung verhindern, wie zum Beispiel Schwalbenschwanznuten oder dergleichen in radialer Richtung wirksame Hinterschneidungen, zu verringern oder vollständig auf diese zu verzichten.

Vorteilhafte Weiterbildungen sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Gemäß einer Weiterbildung der Offenbarung ist vorgesehen, dass sich die Aufnahmetaschen jeweils entlang einer Öffnungsachse in den Aufnahmekörper erstrecken, die senkrecht oder schräg zur Rotationsachse angeordnet ist. Insbesondere bedeutet dies, dass sich der Öffnungsabschnitt und der Begrenzungsabschnitt einer Aufnahmetasche auf einer Achse befinden, die parallel zur radialen Richtung, oder nahezu parallel ist, beispielsweise mit einer Abweichung von kleiner oder gleich 30° zur radialen Richtung.

In einer bevorzugten Weiterbildung sind die Aufnahmetaschen konkav ausgebildet. Insbesondere weist die Aufnahmetasche einen Wandabschnitt auf, der sich von dem Öffnungsabschnitt bis zum Begrenzungsabschnitt erstreckt. Bevorzugt weist der Wandabschnitt einen Taschenöffnungswinkel zwischen einer radialen Innenseite des Aufnahmekörpers und dem Wandabschnitt auf, der, insbesondere an jeder Stelle der Aufnahmetasche, kleiner oder gleich 90° ist.

Bei einer Weiterbildung kann vorgesehen sein, dass eine Körperlängsachse des Wuchtkörpers entlang einer Umfangsrichtung angeordnet ist. Die Körperlängsachse kann senkrecht zur Öffnungsachse angeordnet sein und eine Haupterstreckungsrichtung des Wuchtkörpers definieren. Wenn der Aufnahmekörper derart ausgebildet ist, dass die Wuchtkörper entlang der Umfangsrichtung des Rotors angeordnet sind, kann vorteilhaft eine Auswuchtvorrichtung mit geringem axialen Bauraum bereitgestellt werden.

In einer Weiterbildung der Offenbarung kann vorgesehen sein, dass der Aufnahmekörper und/oder der mindestens eine Wuchtkörper eine radial nach innen gerichtete Rastnut aufweist, die ausgebildet ist, den Befestigungsring aufzunehmen. Eine Rastnut, die beispielsweise einen runden, oder rechteckigen Querschnitt aufweisen kann, ermöglicht eine zuverlässige Fixierung des Befestigungsrings, indem er insbesondere eine Bewegung des Befestigungsrings in axialer Richtung verhindert. Indem beispielsweise die Rastnut einen zur radial inneren Seite offenen Kanal ausbildet, kann sich ein - kurzzeitig zwecks Montage elastisch komprimierter - Befestigungsring nach Erreichen der Befestigungsposition in die Rastnut ausbreiten. Es kann vorgesehen sein, dass die Rastnut vollständig in Umfangsrichtung umlaufend ausgebildet ist. In anderen Weiterbildungen kann eine Rastnut abschnittsweise, in Abständen über den Umfang verteilt, ausgebildet sein. Die Rastnut kann ausschließlich in den Wuchtkörpern, oder ausschließlich im Aufnahmekörper, oder auch sowohl in den Wuchtkörpern und dem Aufnahmekörper, ausgebildet sein. Die Rastnut kann mittig auf dem Wuchtkörper angeordnet sein, wobei sich "mittig" insbesondere auf eine axiale Richtung, das heißt eine Richtung parallel zur Rotationsachse AR, bezieht. In einer Weiterbildung entspricht ein Außendurchmesser des Befestigungsrings im unbelasteten Zustand einem Innendurchmesser der Rastnut (gemessen im Grund der Rastnut).

Gemäß einer Weiterbildung ist vorgesehen, dass der Befestigungsring aus einem elastisch verformbaren Material, ausgebildet ist. Geeignete Materialien zu diesem Zweck sind beispielsweise Ti6/4, In718, Nimonic 90 oder Federstahl. Vorteilhaft ist das Material so gewählt, dass es eine Festigkeit aufweist, die es erlaubt den mit einer Vorspannung versehen Befestigungsring ein- und wieder auszubauen, ohne dass er bleibende Verformungen erleidet und/oder die Vorspannung verloren geht. Insbesondere erlaubt das gewählte Material eine Montage und Demontage des Befestigungsrings, ohne in dem Bereich plastischer Verformung zu gelangen. Insbesondere ist der Befestigungsring derart elastisch und so dimensioniert, dass zum Einsetzen in die Rastnut eine Verformungskraft überwunden werden muss, und/oder im montierten Zustand eine Haltekraft auf den Wuchtkörper ausübt.

Gemäß einer Weiterbildung ist vorgesehen, dass die radiale Innenseite des Aufnahmekörpers zumindest teilweise, insbesondere im Bereich der Aufnahmetaschen und/oder der Rastnut, oder der mindestens eine Wuchtkörper zumindest teilweise, insbesondere an seiner Oberseite, eine Oberflächenbehandlung aufweist. Die Oberflächenbehandlung kann eine Beschichtung und/oder eine Veränderung, insbesondere Erhöhung, der Oberflächenrauheit umfassen. Die Beschichtung kann beispielsweise mittels einer CVD- oder PVD-Beschichtung, oder einem anderen geeigneten Materialauftragsverfahren, hergestellt werden. Die Oberflächenbehandlung kann das Auftragen einer Deckschicht umfassen. Die Erhöhung der Oberflächenrauheit kann durch mechanische Fertigungsverfahren erreicht werden, beispielsweise spanende Verfahren mit geometrisch unbestimmter oder bestimmter Schneide, oder mit einem Strahlverfahren mit abrasivem Strahlmittel. Mittels einer Oberflächenbehandlung kann vorteilhaft eine Erhöhung der Dämpfung erreicht werden, insbesondere indem zwischen Aufnahmekörper und dem mindestens einen Wuchtgewicht, und/oder zwischen dem Befestigungsring und dem Aufnahmekörper, und/oder zwischen dem Befestigungsring und dem mindestens einen Wuchtgewicht, eine Schicht mit unterschiedlichen Materialeigenschaften vorgesehen ist.

In einer Weiterbildung der Offenbarung ist vorgesehen, dass einer oder mehrere des mindestens einen Wuchtkörpers ein Fixierungselement aufweist, das ausgebildet ist, den Befestigungsring an den Wuchtkörper zu fixieren. Insbesondere ist das Fixierungselement ausgebildet, eine Relativbewegung zwischen dem Befestigungsring und dem Wuchtkörper in Umfangsrichtung zu verhindern. Insbesondere kann vorgesehen sein, dass ein einzelner von mehreren Wuchtkörpern das Fixierungselement aufweist. Dadurch dass ein Fixierungselement in einer Unterbrechung des Befestigungsrings angeordnet ist, und somit den Befestigungsring in der Rastnut befestigt, können die übrigen Wuchtkörper in bereits beschriebener Weise über eine vom Befestigungsring ausgeübte Haltekraft sicher in einer jeweiligen Aufnahmetasche gehalten werden. Das Fixierungselement kann als separates Bauteil ausgebildet sein und ausgebildet sein, in eine Aufnahme des Wuchtkörpers eingesetzt und mit diesem verbunden zu werden. In anderen Weiterbildungen kann das Fixierungselement integral mit dem Wuchtkörper verbunden ausgebildet sein.

Gemäß einer Weiterbildung ist vorgesehen, dass der Befestigungsring zwischen einer ersten Ringstirnseite und einer zweiten Ringstirnseite eine Unterbrechung aufweist. Eine derartige Unterbrechung kann die Elastizität des Befestigungsrings vorteilhaft beeinflussen, sodass eine Montage vereinfacht wird. Insbesondere kann dadurch die zu überwindende Verformungskraft, die zum Einsetzen des Befestigungsrings in die Rastnut aufgewendet werden muss, herabgesetzt werden. Durch Auswahl eines geeigneten Materials und die Dimensionierung der Unterbrechung kann eine geeignete Elastizität erreicht werden, die insbesondere noch hoch genug ist, um eine sichere Befestigung der Wuchtkörper zu gewährleisten.

In einer Weiterbildung der Offenbarung ist vorgesehen, dass das Fixierungselement ausgebildet ist, in der Unterbrechung des Befestigungsrings angeordnet zu werden. Das Fixierungselement kann somit in Umfangsrichtung zwischen der ersten und zweiten Ringstirnseite des Befestigungsrings angeordnet werden. Auf diese Weise kann das Fixierungselement wirksam eine Annäherung der beiden beanstandeten Ringstirnseiten, und somit ein unbeabsichtigtes Lösen des Befestigungsrings aus der Rastnut, verhindern. Es wird somit eine formschlüssige Sicherung des Befestigungsrings in der Rastnut erreicht. Vorteilhaft ist das Fixierungselement und die Unterbrechung des Befestigungsrings derart dimensioniert, dass beide Ringstirnseiten im montierten Zustand mit dem Fixierungselement in Kontakt stehen.

Gemäß einer Weiterbildung der Offenbarung kann vorgesehen sein, dass der Befestigungsring einen runden oder polygonalen, insbesondere rechteckigen, Ringquerschnitt aufweist. Vorteilhaft kann bei Weiterbildungen mit einer Rastnut die Rastnut einen korrespondierenden Querschnitt aufweisen, um einen sicheren Halt des Befestigungsrings in der Rastnut zu ermöglichen.

In einer Weiterbildung der Offenbarung ist vorgesehen, dass der Wuchtkörper eine veränderliche radiale Körperhöhe aufweist, die entlang der Körperlängsachse, und/oder in Umfangsrichtung, von einer ersten Stirnseite zunächst ansteigend, eine maximale radiale Körperhöhe erreichend und bis zu einer zweiten Stirnseite abfallend ist. Insbesondere kann die veränderliche radiale Körperhöhe einer Bogenform entsprechen, sodass eine geschwungene oder halbkreisförmige oder parabelförmige Form des Wuchtkörpers resultiert. Ein derartiger Wuchtkörper hat den Vorteil, dass er sich, spätestens bei Aufbringen der Haltekraft, selbstständig im Aufnahmekörper zentriert, bzw. gemäß einer Sollposition ausrichtet. Hierdurch wird die Montage vorteilhaft weiter vereinfacht. Neben derartigen bogenförmigen Höhen- bzw. Seitenprofilen des Wuchtkörpers sind andere Formen eines Seitenprofils möglich, insbesondere mehreckige (polygonale), oder im einfachsten Fall lediglich eine Ecke an der maximalen radialen Körperhöhe, sodass insgesamt ein dreieckiges Seitenprofil (mit einer genickten Oberseite und einer geraden Unterseite) des Wuchtkörpers entsteht.

In einer anderen Weiterbildung kann vorgesehen sein, dass der Wuchtkörper im Wesentlichen quaderförmig ausgebildet ist und/oder mindestens eine abgerundete Kante aufweist. Vorteilhaft weist die Aufnahmetasche eine korrespondierende Geometrie, zum Beispiel mit entsprechend abgerundeten Kanten, auf.

In einem zweiten Aspekt schlägt die Offenbarung einen Rotor für eine Maschine vor, insbesondere Kraftmaschine, zum Beispiel Verbrennungskraftmaschine oder Gasturbinentriebwerk, oder Arbeitsmaschine, aufweisend eine Rotorstufe mit einer Auswuchtvorrichtung gemäß dem ersten Aspekt der Offenbarung.

Bei einer Weiterbildung des Rotors gemäß dem zweiten Aspekt ist vorgesehen, dass Aufnahmekörper radial unterhalb einer Aerofoil-Plattform des Rotors angeordnet ist und/oder integral mit der Aerofoil-Plattform verbunden ist, insbesondere dass der Rotor als BLISK-Rotor ausgebildet ist. Bei derartigen Rotoren kann die platzsparende und sichere Auswuchtvorrichtung gemäß dem ersten Aspekt besonders vorteilhaft angewendet werden.

In einem dritten Aspekt schlägt die Offenbarung eine Maschine vor, insbesondere Kraftmaschine, zum Beispiel Verbrennungskraftmaschine oder Gasturbinentriebwerk, oder Arbeitsmaschine, aufweisend eine Auswuchtvorrichtung gemäß dem ersten Aspekt und/oder einen Rotor gemäß dem zweiten Aspekt der Offenbarung.

Es soll verstanden werden, dass die Auswuchtvorrichtung gemäß dem ersten Aspekt der Erfindung, der Rotor gemäß dem zweiten Aspekt der Erfindung und die Maschine gemäß dem dritten Aspekt der Erfindung gleiche und ähnliche Unteraspekte aufweisen, wie sie insbesondere in den abhängigen Ansprüchen niedergelegt sind. Insofern wird für die Weiterbildung eines Aspekts der Erfindung auch auf die Weiterbildungen der anderen Aspekte der Erfindung verwiesen.

Ausführungsformen der Offenbarung werden nun nachfolgend anhand der Zeichnung im Vergleich zum Stand der Technik, welcher zum Teil ebenfalls dargestellt ist, beschrieben. Diese soll die Ausführungsformen nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Offenbarung abzuweichen. Die in der Beschreibung, in der Zeichnung sowie in den Ansprüchen offenbarten Merkmale der Offenbarung können sowohl einzeln als auch in beliebiger Kombination für die Weiterbildung der Offenbarung wesentlich sein. Zudem fallen in den Rahmen der Offenbarung alle Kombinationen aus zumindest zwei der in der Beschreibung, der Zeichnung und/oder den Ansprüchen offenbarten Merkmale. Die allgemeine Idee der Offenbarung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein.

Weitere Vorteile, Merkmale und Einzelheiten der Offenbarung ergeben sich aus der nachfolgenden Beschreibung der bevorzugten Ausführungsformen sowie anhand der Zeichnung; diese zeigt in:
- Fig. 1: eine erste Ausführungsform einer Auswuchtvorrichtung,
- Fig. 2: eine zweite Ausführungsform einer Auswuchtvorrichtung,
- Fig. 3: eine weitere Ansicht der ersten Ausführungsform der Auswuchtvorrichtung,
- Fig. 4A: eine weitere Ansicht der ersten Ausführungsform der Auswuchtvorrichtung,
- Fig. 4B: eine dritte Ausführungsform einer Auswuchtvorrichtung,
- Fig. 5: eine perspektivische Ansicht eines Wuchtkörpers,
- Fig. 6A, 6B: Ansichten einer zweiten Variante eines Wuchtkörpers,
- Fig. 7A, 7B: Ansichten einer dritten Variante eines Wuchtkörpers,
- Fig. 8: schematisch und in einer Schnittdarstellung ein Gasturbinentriebwerk,
- Fig. 9A, 9B: Schnittansichten eines Hochdruckverdichters mit Auswuchtvorrichtung.

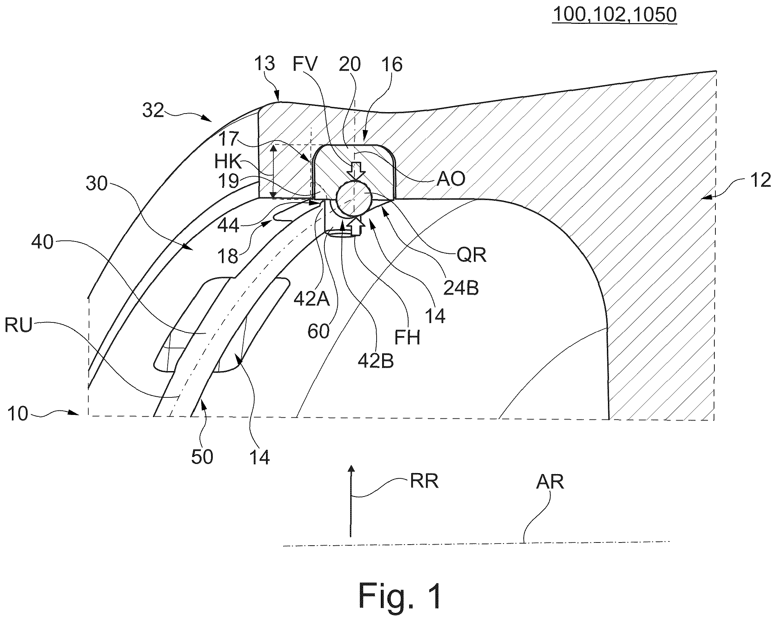

Fig. 1 zeigt eine erste Ausführungsform einer Auswuchtvorrichtung 10 gemäß dem Konzept der Offenbarung. Die Auswuchtvorrichtung 10 ist Teil einer Rotorstufe 1050 eines Rotors 100, wobei der Rotor 100 vorliegend als BLISK-Rotor 102, d. h. als einen Rotor 100 mit integral angeformten Rotorschaufeln (in Fig. 1 nicht gezeigt) ausgebildet. Der Rotor 100 ist um eine Rotationsachse AR, die hier lediglich schematisch und nicht maßstäblich dargestellt ist, drehbar gelagert. Hierbei ist eine perspektivische Schnittdarstellung durch einen Aufnahmekörper 12 gezeigt, wobei sich der Schnitt ebenfalls durch einen in eine Aufnahmetasche 14 eingesetzten Wuchtkörper 20 erstreckt. Der Aufnahmekörper 12 umfasst einen sich in axialer Richtung erstreckenden Flanschabschnitt 13, der in seiner umlaufenden, radial inneren Seite 30 einen praktisch hohlzylindrischen Innenraum ausbildet. An der radial inneren Seite 30 des Flanschabschnitts 13 bzw. Aufnahmekörper 12 bildet sich somit ein Raum aus, über den sämtliche Aufnahmetaschen 14 der Auswuchtvorrichtung 10 zugänglich sind. Eine Anzahl von Aufnahmetaschen 14 sind gleich verteilt über den Umfang, d. h. in einer Umfangsrichtung RU, auf der Innenseite des Aufnahmekörpers 12 angeordnet. Die Aufnahmetasche 14 weist einen Öffnungsabschnitt 18 auf, der auf der radial inneren Seite des Flanschabschnitts 13 liegt. Von dem Öffnungsabschnitt 18 erstreckt sich die Aufnahmetaschen 14 entlang einer Öffnungsachse AO in radiale Richtung RR nach außen über einen Wandabschnitt 19 bis zu einem Begrenzungsabschnitt 16, welcher eine weitere Bewegung des Wuchtkörpers 20 nach außen, das heißt zu einer radial äußeren Seite 32, begrenzt. Ein Taschenöffnungswinkel 19 zwischen dem Wandabschnitt 19 und der zur radialen Innenseite gewandten Oberfläche des Aufnahmekörpers 12 beträgt in der gezeigten Schnittebene ca. 90°. An den in der Schnittansicht nicht sichtbaren in Umfangsrichtung RU stirnseitigen Enden ist der Taschenöffnungswinkel aufgrund der bogenförmigen Oberseite des Wuchtkörpers 20 entsprechend geringer, beispielsweise in einem Bereich von 10° bis 45°, insbesondere in einem Bereich von 20° bis 30°. Vorliegend ist der Begrenzungsabschnitt 16 als durchgehend geschlossene Fläche ausgebildet. Gleichwohl kann in anderen Ausführungsformen vorgesehen sein, dass der Begrenzungsabschnitt, zum Beispiel aus Gewichtsgründen, Öffnungen oder Löcher aufweist, oder lediglich als Stufe ausgebildet ist. Hier sind unterschiedliche Gestaltungen möglich, solange die Funktion, eine Begrenzung der Bewegung des Wuchtkörpers 20 in radiale Richtung RR nach außen herzustellen, erfüllt wird.

Der Schnitt der Schnittdarstellung verläuft ungefähr auf der Hälfte des Wuchtkörpers 20, sodass sich eine radiale Körperhöhe HK nahezu an ihrem Maximum befindet. Ein Befestigungsring 40 befindet sich im gezeigten, montierten Zustand der Auswuchtvorrichtung 10 in einer Rastnut 50, die in der Art eines Kanals in Umfangsrichtung RU umlaufend auf der radialen Innenseite 30 des Aufnahmekörpers 12 ausgebildet ist. Der Befestigungsring 40 ist in Umfangsrichtung RU unterbrochen und weist entsprechend zwischen einer ersten Ringstirnseite 42A und einer zweiten Ringstirnseite 42B eine Unterbrechung 44 auf. Im eingesetzten Zustand übt der Befestigungsring 40 eine Haltekraft FH auf die eingesetzten Wuchtkörper 20 aus. Zur Montage bzw. Demontage kann der Befestigungsrings 40 gegen eine Verformungskraft FV verformt bzw. zusammengedrückt werden, um somit in die Rastnut 50 eingesetzt bzw. aus dieser entnommen werden kann. Vorliegend ist ein Ringquerschnitt QR des Befestigungsrings 40 kreisförmig ausgebildet. Entsprechend weist die Rastnut 50 einen, mit dem Ringquerschnitt QR korrespondierenden, halbkreisförmigen Querschnitt auf. Auch der Wuchtkörper 20 ist auf seiner Unterseite 24B, d. h. der Rotationsachse AR zugewandten Seite mit der Rastnut 50 ausgebildet, der im eingesetzten Zustand des Wuchtkörpers 20 eine Fortsetzung der in den Aufnahmekörper 12 eingeformten Rastnut 50 bildet. Weiterhin ist in Fig. 1 ein Fixierungselement 60 dargestellt, welches vorliegend an dem Wuchtkörper 20 fixiert ist und im montierten Zustand in einer Unterbrechung 42 des Befestigungsrings 40 angeordnet ist. Das Fixierungselement 60 stellt somit, nach Einsetzen des Wuchtkörpers 20 eine zuverlässige Fixierung des Befestigungsrings 40 sicher, indem sie insbesondere ein elastisches Verformen und/oder ein Verrutschen des Befestigungsrings 40 in Umfangsrichtung RU verhindert. Unabhängig von dem Fixierungselement 60 können weitere Wuchtkörper 20, insbesondere ohne ein derartiges Fixierungselement 60, in die Auswuchtvorrichtung 10 bzw. den Aufnahmekörper 12 eingesetzt werden.

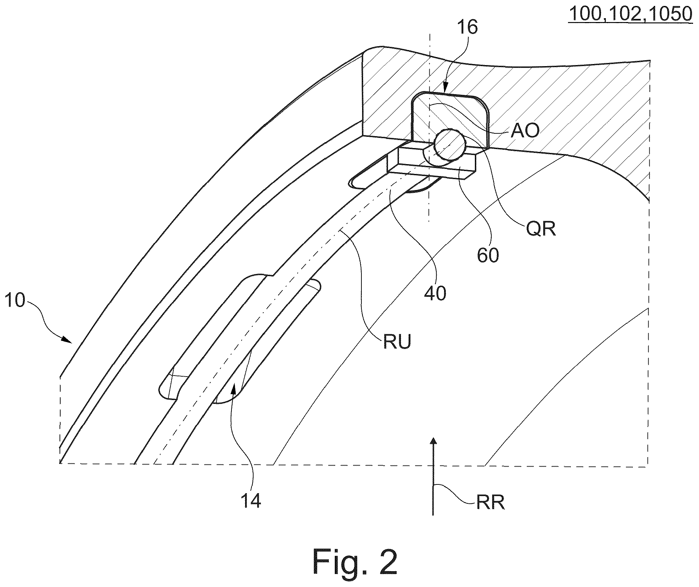

Fig. 2 zeigt eine weitere, zweite Ausführungsform einer Auswuchtvorrichtung 10. Im Unterschied zu der in Fig. 1 gezeigten ersten Ausführungsform weist das Fixierungselement 60 vorliegend eine Quaderform auf, im Gegensatz zu der in Fig. 1 gezeigten Zylinderform.

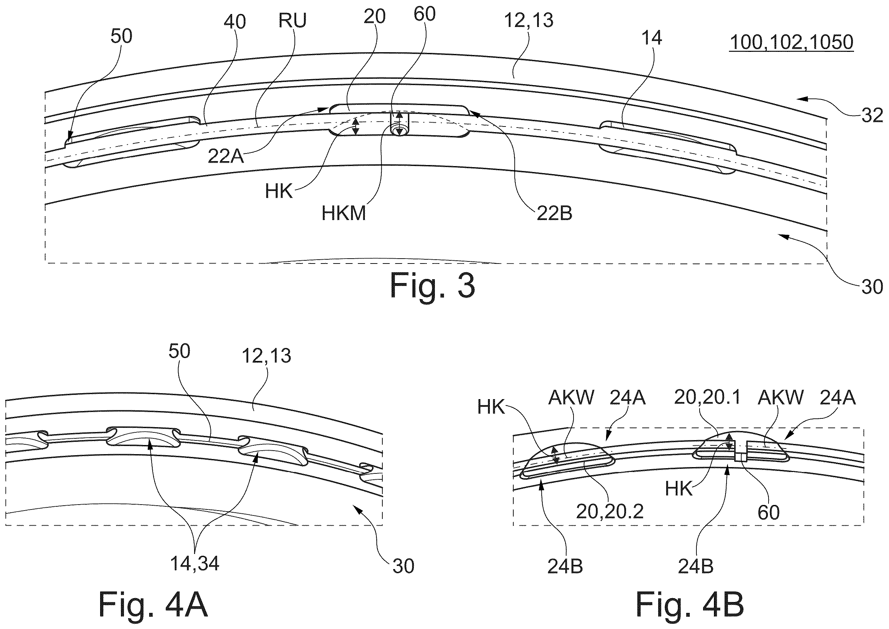

Fig. 3 zeigt eine weitere Ansicht der in Fig. 1 gezeigten ersten Ausführungsform der Auswuchtvorrichtung 10. In der perspektivischen Ansicht ist wieder ein eingesetzter Wuchtkörper 20 sichtbar, wobei schematisch ein Verlauf einer radialen Körperhöhe HK von einer ersten Stirnseite 22A zu einer zweiten Stirnseite 22B des Wuchtkörpers 20 dargestellt ist. Es ist sichtbar, wie die radiale Körperhöhe HK, ausgehend von der ersten Stirnseite 22A bogenförmig bis zur Mitte ansteigt, wo sie eine maximale radiale Körperhöhe HKM erreicht und dann in der zweiten Hälfte der Körperlänge, symmetrisch zur ersten Hälfte, bis zur zweiten Stirnseite 22B abfällt. Auf diese Weise ergibt sich eine gebogene, bzw. parabelförmige oder gestaucht halbkreisförmige, Geometrie des Wuchtkörpers 20 (und entsprechend auch der Aufnahmetasche 14).

Fig. 4A zeigt eine weitere Ansicht der in Fig. 3 gezeigten Ausführungsform, jedoch ohne Wuchtkörper 20 und Befestigungsring 40, sodass lediglich der Aufnahmekörper 12, und zwar die radial innere Seite 30 des Flanschabschnittes 13, gezeigt ist. Hierbei sind die Aufnahmetaschen 14 sichtbar, sowie die sich in Umfangsrichtung RU erstreckende und durch Aufnahmetaschen 14 verlaufende Rastnut 50. Der Aufnahmekörper 12 kann in optionalen Ausführungsformen, beispielsweise wie hier gezeigt im Bereich der Aufnahmetaschen 14, eine Oberflächenbehandlung 34 aufweisen. Alternativ oder zusätzlich kann in optionalen Ausführungsformen eine Oberflächenbehandlung 34 auch in der Rastnut 50 und/oder auf dem Befestigungsring 40 vorgenommen sein.

In Fig. 4B ist eine detaillierte Schnittansicht einer weiteren, dritten Ausführungsform einer Auswuchtvorrichtung 10 gezeigt, bei der sowohl ein erster Wuchtkörper 20.1 mit einem Fixierungselement 60, als auch ein zweiter Wuchtkörper 20.2 ohne ein derartiges Fixierungselement, sichtbar ist. Der Schnitt der Schnittansicht verläuft hierbei in einer axialen Ebene durch die Rastnut 50, sodass sowohl der Aufnahmekörper 12 im Bereich der Rastnut 50 als auch die Wuchtkörper 20.1, 20.2 in ihrer Mitte geschnitten dargestellt sind. Dadurch, dass die beiden Wuchtkörper 20.1, 20.2 geschnitten dargestellt sind, wird ihr in Umfangsrichtung RU bogenförmiges Höhenprofil der Oberseite 24A sichtbar. Eine radiale Körperhöhe HK des jeweiligen Wuchtkörpers 20, 20.1, 20.2 verläuft entlang einer Körperlängsachse AKW zunächst ansteigend und nach Erreichen einer maximalen radialen Körperhöhe HKM in der Mitte des Wuchtkörpers 20 dann abfallend.

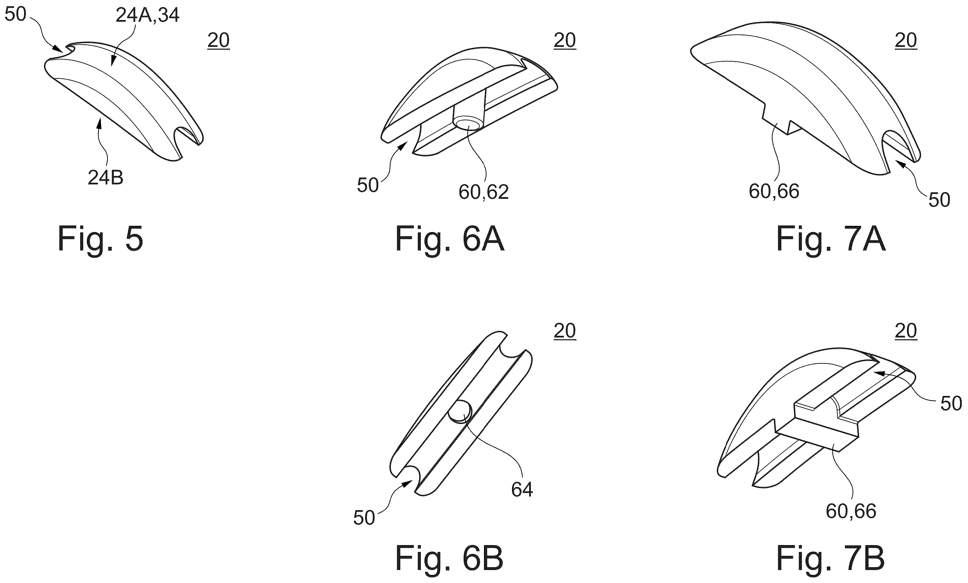

Fig. 5 zeigt eine perspektivische Ansicht eines Wuchtkörpers 20, der ausgebildet ist zur Verwendung in einer Auswuchtvorrichtung gemäß dem Konzept der Offenbarung. Eine Oberseite 24A des Wuchtkörpers 20, die im eingesetzten Zustand des Wuchtkörpers 20 bevorzugt in radiale Richtung RR nach außen gerichtet ist, weist vorliegend eine gewölbte, bogen- oder parabelförmige Oberfläche auf. Eine der Oberseite 24A gegenüberliegende Unterseite 24B des Wuchtkörpers 20 weist vorliegend eine flache Oberfläche auf, die lediglich durch die Rastnut 50 unterbrochen ist. Gleichwohl sind im Rahmen der Offenbarung andere Geometrie in der Oberseite 24A oder der Unterseite 24B möglich. So könnte die Oberseite 24A beispielsweise ein gestuftes oder polygonales bzw. mehreckig verlaufendes Profil aufweisen. Auch könnte die Unterseite 24B zum Beispiel eine dem runden Verlauf des Aufnahmekörper 12 und/des Flanschabschnittes 13 angepasste Form aufweisen, sodass der Wuchtkörper im eingesetzten Zustand fluchtend mit diesem ist. Der Wuchtkörper 20 kann in optionalen Ausführungsformen, beispielsweise wie hier gezeigt an seiner Oberseite 24A, eine Oberflächenbehandlung 34 aufweisen.

Fig. 6A und Fig. 6B zeigen eine weitere Ausführungsform eines Wuchtkörpers 20, der im Unterschied zu dem in Fig. 5 gezeigten Wuchtkörper ein Fixierungselement 60, vorliegend in Form eines einsetzbaren, zylindrischen Fixierungsstifts 62 aufweist. Gleichwohl sind andere Querschnitte eines Fixierungsstift 62 möglich, beispielsweise polygonale, insbesondere rechteckige, Querschnitte. In Fig. 6B ist der Wuchtkörper ohne das eingesetzte Fixierungselemente 60 dargestellt, sodass eine Aufnahme 64 gezeigt ist, die dazu ausgebildet ist, das Fixierungselement 60, beispielsweise reib- und/oder kraftschlüssig und/oder über eine Presspassung, aufzunehmen. Ein Vorteil eines solchen Wuchtkörpers 20 mit einsetzbaren Fixierungselement 60 liegt darin, dass grundsätzlich der gleiche Typ von Wuchtkörper 20 verwendet werden kann, sowohl für den Einsatz mit einem Fixierungselement 60, als auch für den Einsatz ohne derartiges Fixierungselement 60, da im letzteren Fall kein Fixierungselement den Raum für den Befestigungsrings 40 versperrt.

Fig. 7A und Fig. 7B zeigen eine weitere Ausführungsform eines Wuchtkörpers 20 mit einer weiteren Form eines Fixierungselements 60, das vorliegend in Form eines integral angeformten Fixierungsanschlags 66 ausgebildet ist (wie bereits in Fig. 2 gezeigt).

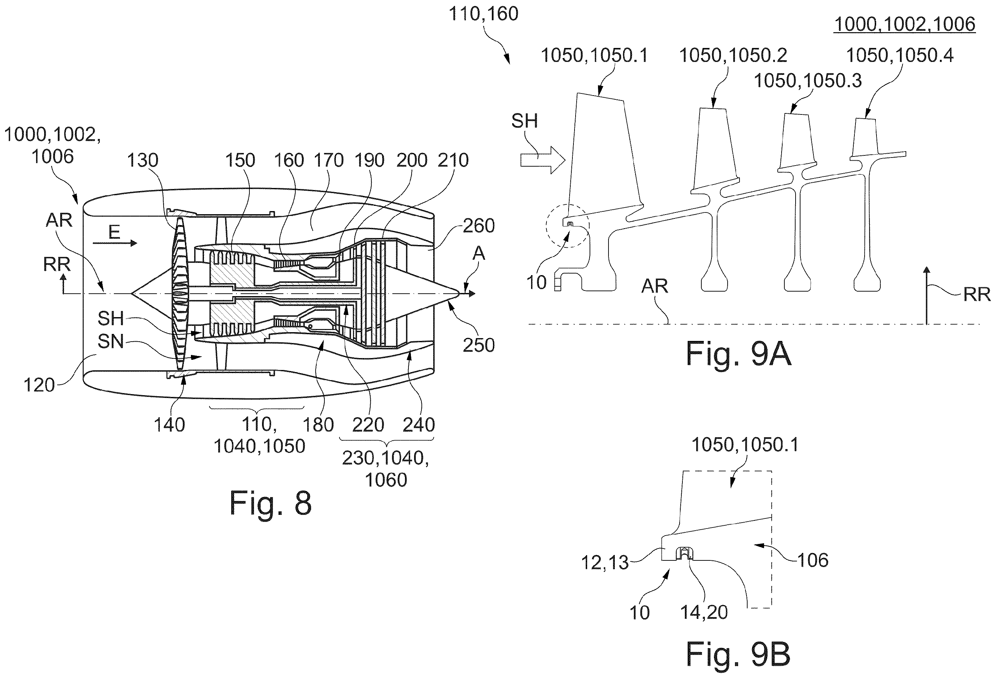

Fig. 8 zeigt schematisch und in einer Schnittdarstellung ein Gasturbinentriebwerk 1000. Entlang einer Triebwerkslängsachse A des Gasturbinentriebwerks 1000, die vorliegend der Rotationsachse AR entspricht, sind Triebwerkskomponenten hintereinander angeordnet. Am Einlass 120 wird mittels eines Fans 130 entlang einer Eintrittsrichtung E Luft angesaugt. Dieser Fan 130 ist in einem Fangehäuse 140 angeordnet und wird von einer Niederdruckturbine 210 einer Turbine 230 über eine Rotorwelle 220 angetrieben. Die Turbine 230 umfasst mindestens eine Rotorstufe 1040 in Form einer Turbinenstufe 1060, und schließt sich an einen Verdichter 110 an, der mindestens einen Hochdruckverdichter 160 sowie gegebenenfalls, wie hier gezeigt, noch einen Niederdruckverdichter 150 und/oder einen Mitteldruckverdichter aufweist. Der Verdichter 110, bzw. jeweils der Hochdruckverdichter 160 und der Niederdruckverdichter 150, weist mindestens eine Rotorstufe 1040 in Form einer Verdichterstufe 1050 auf. Zur Schuberzeugung versorgt der Fan 130 den Niederdruckverdichter 150 und den Hochdruckverdichter 160 sowie einen Bypasskanal 170 mit Luft. Somit entsteht ein Hauptstrom SH, der durch den Kern der Gasturbine 1000 verläuft, und ein Nebenstrom SN der durch den Bypasskanal 170 verläuft. Die im Verdichter 150, 160 komprimierte Luft wird in der Brennkammer 180 mit Brennstoff vermischt und verbrannt. Mit dem erzeugten Heißgas wird die Turbine 230, welche mindestens eine Hochdruckturbine 190, gegebenenfalls wie hier gezeigt, eine Mitteldruckturbine 200 und gegebenenfalls noch eine Niederdruckturbine 210 umfassen kann, angetrieben. Die bei der Verbrennung freiwerdende Energie wird von der Turbine 230 zum Antreiben des Verdichters 110 und des Fans 130 genutzt, um dann über die in den Bypasskanal 170 geförderte Luft den erforderlichen Schub zu erzeugen. Sowohl der Nebenstrom SN aus dem Bypasskanal 170 als auch der Hauptstrom SH strömen über einen Auslass 260 hinaus. Der Auslass 260 weist hierbei üblicherweise eine Schubdüse mit einem zentral angeordneten Austrittskonus 250 auf. Zur Lärmminderung befindet sich im Bereich des Auslasses ein Mischer als Teil einer Mischergruppe 240. Durch die besondere Kontur des Mischers werden der Hauptstrom aus dem Kernstrom und der Nebenstrom aus dem Bypasskanal 170 der Gasturbine 1000 so abgelenkt und vermischt, dass die dabei entstehenden Verwirbelungen das hörbare Lärmniveau absenken. Auch bei abweichend ausgestalteten Gasturbinen kann die vorgeschlagene Lösung Anwendung finden, beispielsweise bei einer beliebigen Art Gasturbinentriebwerk wie zum Beispiel bei einem Open-Rotor oder einem Turboprop-Triebwerk oder einem Getriebe-Fan, oder stationären Gasturbinen oder anderen rotierenden Maschinen.

Fig. 9A zeigt eine schematische Schnittdarstellung eines Ausschnitts eines Verdichters 110 eines Gasturbinentriebwerk 1006, wie es beispielhaft in Fig. 8 gezeigt ist, mit einer Anzahl von als Verdichterstufen 1050 ausgebildeten Rotorstufen 1040. In dem Ausschnitt sind jeweils, in Richtung des Hauptstroms SH benachbart, eine erste Verdichterstufe 1050.1, eine zweite Verdichterstufe 1050.2, eine dritte Verdichterstufe 1000.3 und eine vierte Verdichterstufe 1050.4 gezeigt. Der vorliegend gezeigte Ausschnitt ist Teil eines Hochdruckverdichters 160 des Verdichters 110.

Fig. 9B ist eine weiter detaillierte Ansicht des in Fig. 9A gezeigten Hochdruckverdichters 160, und zwar im Bereich der Auswuchtvorrichtung 10. Es ist sichtbar, wie die Auswuchtvorrichtung 10 auf der radialen Innenseite der ersten Verdichterstufe 1050.1 in einer Aerofoil-Plattform 106 angeordnet ist. Ein Aufnahmekörper 12, bzw. ein Flanschabschnitt 13 des Aufnahmekörpers 12, ist integral mit der Aerofoil-Plattform 106 ausgebildet. Die Schnittdarstellung verläuft durch eine der Aufnahmetaschen 14, und es ist ein darin eingesetzter Wuchtkörper 20 sichtbar.

### Bezugszeichenliste (Teil der Beschreibung)

- 10: Auswuchtvorrichtung
- 12: Aufnahmekörper
- 13: Flanschabschnitt
- 14: Aufnahmetasche
- 16: Begrenzungsabschnitt
- 17: Wandabschnitt
- 18: Öffnungsabschnitt
- 19: Taschenöffnungswinkel
- 20: Wuchtkörper
- 20.1, 20.1: erster, zweiter Wuchtkörper
- 22A: erste Stirnseite des Wuchtkörpers
- 22B: zweite Stirnseite des Wuchtkörpers
- 24A: Oberseite des Wuchtkörpers
- 24B: Unterseite des Wuchtkörpers
- 30: radiale Innenseite, radial innere Seite des Aufnahmekörpers
- 32: radiale Außenseite, radial äußere Seite des Aufnahmekörpers
- 34: Oberflächenbehandlung
- 40: Befestigungsring
- 42: Ringstirnseite
- 42A, 42B: erste, zweite Ringstirnseite
- 44: Unterbrechung
- 50: Rastnut
- 60: Fixierungselement
- 62: Fixierungsstift
- 64: Aufnahme, Stiftaufnahme
- 66: Fixierungsanschlag

- 100: Rotor
- 102: BLISK-Rotor
- 106: Aerofoil-Plattform des Rotors
- 110: Verdichter
- 120: Einlass
- 130: Fan
- 140: Fangehäuse
- 150: Niederdruckverdichter
- 160: Hochdruckverdichter
- 170: Bypasskanal
- 180: Brennkammer
- 190: Hochdruckturbine
- 200: Mitteldruckturbine
- 210: Niederdruckturbine
- 220: Rotorwelle
- 230: Turbine
- 240: Mischergruppe
- 250: Austrittskonus
- 260: Auslass

- 1000: Maschine
- 1002: Kraftmaschine
- 1004: Verbrennungskraftmaschine
- 1006: Gasturbinentriebwerk
- 1008: Arbeitsmaschine
- 1040: Rotorstufe
- 1050: Verdichterstufe
- 1060: Turbinenstufe

- AKW: Körperlängsachse, Körperlängsachse des Wuchtkörper
- AO: Öffnungsachse, Öffnungsachse der Aufnahmetasche
- AR: Rotationsachse
- E: Eintrittsrichtung
- FH: Haltekraft
- FV: Verformungskraft
- HK: radiale Körperhöhe des Wuchtkörpers
- HKM: maximale Körperhöhe, maximale radiale Körperhöhe
- QR: Ringquerschnitt
- RR: radiale Richtung
- RU: Umfangsrichtung, tangentiale Richtung
- SH: Hauptstrom
- SN: Nebenstrom

## Patentansprüche

1. Auswuchtvorrichtung (10) für einen Rotor (100), umfassend:
- einen konzentrisch zu einer Rotationsachse (AR) des Rotors (100) angeordneten Aufnahmekörper (12) mit einer Mehrzahl an um die Rotationsachse (AR) verteilten Aufnahmetaschen (14),
- mindestens einen Wuchtkörper (20), der zur Aufnahme in eine der Aufnahmetaschen (14) ausgebildet ist,
**dadurch gekennzeichnet, dass**
- die Aufnahmetaschen (14) an einer radial inneren Seite (30) einen Öffnungsabschnitt (18), über den der Wuchtkörper (20) eingesetzt werden kann, und an einer radial äußeren Seite (32) einen Begrenzungsabschnitt (16) aufweisen, wobei der Wuchtkörper (20) im eingesetzten Zustand an dem Begrenzungsabschnitt (16) anliegt, und
- die Auswuchtvorrichtung (10) einen Befestigungsring (40) aufweist, der radial innerhalb des Aufnahmekörpers (12) angeordnet ist und ausgebildet ist, mit dem mindestens einen Wuchtkörper (20) in Kontakt gebracht zu werden, und den Wuchtkörper (20) in der Aufnahmetasche (14) zu halten.

2. Auswuchtvorrichtung (10) nach Anspruch 1, **dadurch gekennzeichnet, dass** sich die Aufnahmetaschen (14) jeweils entlang einer Öffnungsachse (AO) in den Aufnahmekörper (12) erstrecken, die senkrecht oder schräg zur Rotationsachse (AR) angeordnet ist.

3. Auswuchtvorrichtung (10) nach Anspruch 1 oder 2, **dadurch gekennzeichnet, dass** der Aufnahmekörper (12) und/oder der mindestens eine Wuchtkörper (20) eine radial nach innen gerichtete Rastnut (50) aufweist, die ausgebildet ist, den Befestigungsring (40) aufzunehmen.

4. Auswuchtvorrichtung (10) nach einem der vorherigen Ansprüche, **dadurch gekennzeichnet, dass** einer oder mehrere des mindestens einen Wuchtkörpers (20) ein Fixierungselement (60) aufweist, das ausgebildet ist, den Befestigungsring (40) an den Wuchtkörper (20) zu fixieren.

5. Auswuchtvorrichtung (10) nach einem der vorherigen Ansprüche, **dadurch gekennzeichnet, dass** der Befestigungsring (40) zwischen einer ersten Ringstirnseite (44A) und einer zweiten Ringstirnseite (44B) eine Unterbrechung (44) aufweist.

6. Auswuchtvorrichtung (10) nach Anspruch 4 und 5, **dadurch gekennzeichnet, dass** das Fixierungselement (60) ausgebildet ist, in der Unterbrechung (44) des Befestigungsrings (40) angeordnet zu werden.

7. Auswuchtvorrichtung (10) nach einem der vorherigen Ansprüche, **dadurch gekennzeichnet, dass** der Befestigungsring (40) einen runden oder polygonalen, insbesondere rechteckigen, Ringquerschnitt (QR) aufweist.

8. Auswuchtvorrichtung (10) nach einem der vorherigen Ansprüche, **dadurch gekennzeichnet, dass** der Wuchtkörper (20) eine veränderliche radiale Körperhöhe (HK) aufweist, die sich entlang einer Körperlängsachse (AKW) des Wuchtkörpers von einer ersten Stirnseite (22A) zunächst ansteigend, eine maximale radiale Körperhöhe (HKM) erreichend und bis zu einer zweiten Stirnseite (22B) abfallend ist.

9. Auswuchtvorrichtung (10) nach einem der Ansprüche 1 bis 8, **dadurch gekennzeichnet, dass** der Wuchtkörper (20) im Wesentlichen quaderförmig ausgebildet ist und/oder mindestens eine abgerundete Kante aufweist.

10. Rotor (100) für eine Maschine (1000), insbesondere Kraftmaschine (1002), zum Beispiel Verbrennungskraftmaschine (1004) oder Gasturbinentriebwerk (1006), oder Arbeitsmaschine (1008), aufweisend eine Rotorstufe (1050) mit einer Auswuchtvorrichtung (10) gemäß einem der vorherigen Ansprüche.

11. Rotor (100) nach Anspruch 10, **dadurch gekennzeichnet, dass** Aufnahmekörper (12) radial unterhalb einer Aerofoil-Plattform (106) des Rotors (100) angeordnet ist und/oder integral mit der Aerofoil-Plattform (106) verbunden ist, insbesondere dass der Rotor (100) als BLISK-Rotor (102) ausgebildet ist.

12. Maschine (1000), insbesondere Kraftmaschine (1002), zum Beispiel Verbrennungskraftmaschine (1004) oder Gasturbinentriebwerk (1006), oder Arbeitsmaschine (1008), aufweisend eine Auswuchtvorrichtung (10) gemäß einem der Ansprüche 1 bis 9 und/oder einen Rotor gemäß Anspruch 10 oder 11.
